# FASCICULE DE BREVET EUROPEEN

(11) **EP 1 694 993 B1**
(45) Date de publication et mention de la délivrance du brevet: **29.10.2008**
(21) Numéro de dépôt: 04816414.9
(22) Date de dépôt: 17.12.2004
(51) Int. Cl.: F16K 31/00

(54) **VANNE HYDRAULIQUE A RONDELLE PIEZOELECTRIQUE**
MIT EINER PIEZOELEKTRISCHEN SCHEIBE VERSEHENES HYDRAULISCHES SCHIEBERVENTIL
HYDRAULIC SLIDE VALVE PROVIDED WITH A PIEZOELECTRIC WASHER

(30) Priorité: 18.12.2003 FR 0314918
(43) Date de publication de la demande: 30.08.2006
(73) Titulaire: BorgWarner, Inc., Auburn Hills, MI 48326-2872 (US)
(72) Inventeur: ARMIROLI, Jean, F-06310 Beaulieu-sur-Mer (FR); GOUBELY, Aimé, F-06430 La Trinité (FR); MAGNAVAL, Jean-Louis, F-06700 Saint Laurent du Var (FR); AUDINEAU, Pascal, I - 18039 San Bernardo (IM) (FR)
(74) Mandataire: Littolff, Denis
(86) Numéro de dépôt international: PCT/FR2004/003279
(87) Numéro de publication internationale: WO 2005/061935

(56) Documents cités:
- GB-A- 1 350 379
- GB-A- 2 051 312
- US-A- 4 383 195
- US-A- 4 561 627
- PATENT ABSTRACTS OF JAPAN vol. 0092, no. 06 (M-406), 23 août 1985 (1985-08-23) & JP 60 065968 A (HITACHI MAXELL KK), 15 avril 1985 (1985-04-15)

## Description

La présente invention concerne une vanne hydraulique de régulation de débit ou de pression comportant au moins une soupape mobile en translation entre une position de fermeture au contact d'un siège et une position d'ouverture à distance de celui-ci, le déplacement de ladite soupape étant piloté par une pièce piézoélectrique.

Des vannes hydrauliques comportant un élément piézoélectrique sont déjà connues et utilisées. Les solutions existantes comportent par exemple des barreaux piézoélectriques qui développent une très grande force mais permettent un faible déplacement. Cette configuration en barreaux présente cependant des inconvénients : une telle pièce, vu son volume, a tendance à se dilater sous l'effet d'une augmentation de température, et il est donc nécessaire de prévoir une compensation en température. Celle-ci est notamment réalisée par l'existence d'un coussin hydraulique situé entre le barreau et la partie mobile de la vanne.

Par ailleurs, la force importante générée par de tels barreaux, par exemple de l'ordre de 2000 N pour des barreaux de 30 mm de long, et qui est notamment due à un effet d'amplification résultant de la géométrie de la pièce, peut entraîner une usure des composants des vannes qui en sont équipées ou tout au moins avoir un effet sur les tolérances desdits composants.

Le vieillissement de l'élément en barreau peut d'autre part changer sa longueur, et provoquer un dérèglement de la vanne du fait de la modification des positions relatives de la soupape et de son siège : une vanne en principe fermée à tension nulle peut ne plus se fermer correctement, etc.

Les concepteurs de telles vannes ont prévu des systèmes pour compenser ou remédier à ces inconvénients, systèmes qui rendent cependant l'électrovanne sensiblement plus compliquée. Cela est d'autant plus vrai que, toujours du fait de sa structure allongée, le barreau doit être précontraint. Cette précontrainte axiale a pour but de faire toujours travailler le barreau en compression, même lorsqu'il s'allonge, afin d'améliorer ses caractéristiques et sa durée de vie.

Enfin, pour obtenir des temps de réponse faibles à l'ouverture et à la fermeture de la vanne, ce qui est le but recherché à titre principal lorsqu'un élément piézoélectrique est intégré dans une vanne, il faut ajouter un ressort de rappel qui aide à ramener des composants contre le barreau piézoélectrique lorsqu'il revient à sa longueur initiale. Le fonctionnement et la mise au point de ces électrovannes, du fait de toutes ces contraintes annexes, est complexe.

En alternative à la configuration en barreau, des vannes ont été équipées de bilames piézoélectriques, qui présentent l'avantage principal d'offrir des courses plus importantes (de l'ordre de 1 mm). Mais l'effort développé par un tel bilame est faible (de l'ordre de 10 N), ce qui s'avère pénalisant. Il faut toujours prévoir au moins un ressort pour diminuer le temps de réponse, au moins dans un sens.

Les configurations à bilames piézoélectriques sont en outre fragiles, et nécessitent des structures spécifiques qui les compliquent sensiblement pour permettre une augmentation du nombre de cycles de fonctionnement.

La présente invention a pour but de proposer une configuration beaucoup plus simple et fiable, qui évite notamment l'utilisation de systèmes additionnels, c'est-à-dire non directement dédiés à la fonction principale exercée par la vanne. L'objectif est également de réduire les coûts, notamment par un choix judicieux de l'élément piézoélectrique.

A cet effet, la vanne hydraulique de régulation de débit ou de pression de l'invention est, à titre principal, munie d'une pièce piézoélectrique en forme de rondelle. Cette rondelle, percée, permet selon l'invention la fixation directe d'un pointeau présentant un axe de déplacement confondu avec l'axe de la rondelle, ledit pointeau étant alors fixé au centre de la rondelle.

Un document GB 2 051 312 décrit une soupape dont le déplacement est piloté par au moins un disque, obstruant via un tampon fixé au centre du ou des disques un canal séparant deux chambres.

La pièce de l'invention, outre sa compacité, et par conséquent son prix de revient bien inférieur à celui des barreaux précités, offre de multiples avantages. En premier lieu, elle n'a nul besoin d'être précontrainte mécaniquement pour fonctionner. Ensuite, elle ne nécessite aucune compensation en température, les écarts de température ne produisant pas d'effet significatif sur elle. Elle a également un temps de réponse qui est très favorable pour les applications dans des vannes hydrauliques. Son vieillissement ne se traduit enfin pas par des modifications dimensionnelles susceptibles d'engendrer des dysfonctionnements.

Le ratio effort / déplacement axial est en outre tout à fait approprié pour ce type d'application. Ces rondelles développent en effet un effort et un déplacement axiaux respectivement supérieurs à ceux produits par les bilames et les barreaux (par exemple 100 microns pour 200 volts) qui en font des composants particulièrement bien adaptés, au surplus facilement intégrables dans de nombreuses configurations d'électrovannes hydrauliques.

De préférence, pour profiter efficacement du bon compromis offert par la rondelle en termes de force exercée et de déplacement axial, l'axe de la rondelle est, dans la vanne hydraulique de l'invention, parallèle à l'axe de translation de la soupape.

La symétrie de révolution de ladite rondelle entraîne en effet que la résultante des forces est localisée sur l'axe de la rondelle. C'est selon cet axe que se produit de plus le déplacement maximal. Il est donc préférable de travailler dans cette direction.

De multiples configurations et variantes de vannes basées sur une telle rondelle sont bien entendu possibles selon leurs destinations, les débits ou pressions à gérer, etc. La vanne hydraulique peut par exemple être compensée en pression, notamment pour réduire les efforts sur les pièces.

Selon une possibilité, un premier pointeau peut être fixé à la rondelle piézoélectrique, apte à obstruer un premier orifice reliant une chambre hydraulique à basse pression à une chambre hydraulique à haute pression, la soupape de la vanne étant constituée d'un second pointeau obstruant un second orifice reliant les chambres respectivement à haute et à basse pression.

Lorsque le premier pointeau ouvre le premier orifice, il se produit progressivement un équilibrage des pressions entre la chambre à basse pression et la chambre à haute pression, qui conduit à un déplacement du second pointeau, c'est-à-dire de la soupape, laquelle s'écarte de son siège. A l'inverse, lorsque le premier pointeau referme l'orifice, la pression augmente à nouveau en amont du second pointeau, c'est-à-dire de la soupape, qui se referme au contact de son siège. Plus le premier pointeau se referme, plus l'effort de fermeture appliqué à la soupape augmente. L'inverse se produit à l'ouverture, dans les deux cas grâce à des sections différentes du pointeau.

Il est à noter que ce type d'électrovanne, dans la conception indiquée, n'a pas à proprement parler de comportement proportionnel. Lorsque la tension aux bornes de la rondelle est augmentée progressivement, le premier pointeau commence à s'ouvrir du fait de la déformation de la rondelle piézoélectrique, puis le second pointeau s'ouvre complètement lorsque le déplacement de la rondelle est suffisant pour faire chuter la pression dans la chambre hydraulique à haute pression. A partir de ce moment, si on augmente encore la tension appliquée à l'élément piézoélectrique, la soupape ne s'ouvrira pas plus.

Pour simuler la proportionnalité, il faut commander la vanne par cycles, par un signal à une fréquence qui soit compatible avec le temps de réponse de la rondelle piézoélectrique pour que la vanne soit effectivement commandée par ledit signal, dont le rapport cyclique est alors variable et la fréquence fixe. Cette possibilité de commande n'est possible que parce que la vanne, du fait de la rondelle piézoélectrique, est rapide. Cette rapidité, obtenue à faible coût, entraîne une bonne précision de la régulation en débit ou en pression, selon le cas.

La configuration à compensation de pression précitée permet de plus un réglage mécanique initial largement simplifié car les deux pointeaux sont indépendants l'un de l'autre, et présente une relation mécanique propre avec la vanne.

De préférence, le premier pointeau est fixé au centre de la rondelle, et présente un axe de déplacement confondu avec l'axe de la rondelle. Cette configuration permet d'optimiser le rendement en profitant des caractéristiques géométriques de la rondelle : le déplacement et la force exercée sont maximaux selon cet axe.

Le second pointeau, c'est-à-dire la soupape, est mobile et guidée en translation entre son siège et une butée située, selon l'axe de son déplacement, à l'opposé dudit siège.

La différence de pression ne lui permet donc qu'un mouvement de translation selon une direction, et dans deux sens dépendant de l'état relatif des pressions dans la chambre à haute pression et dans la chambre à basse pression.

Selon l'invention, le second pointeau constituant la soupape comporte une cavité axiale interne ouverte sur l'extérieur. Cette cavité permet de réduire la masse de la soupape, et de réduire ainsi son inertie et par conséquent les temps de réponse à l'ouverture et à la fermeture.

De préférence encore, ladite cavité comporte deux ouvertures disposées respectivement à l'opposé et à proximité de la portion du pointeau coopérant avec le siège de la soupape, situées dans la même chambre hydraulique, avec les mêmes visées qu'auparavant.

Selon une possibilité, l'accès au premier orifice, c'est-à-dire celui qui est obstruable par le premier pointeau fixé à la rondelle, est partiellement obstrué dans la chambre à haute pression par une pièce restreignant sensiblement le passage du fluide qui doit y franchir un canal de faible diamètre, inférieur à celui dudit premier orifice.

Une telle restriction permet d'obtenir l'effet d'un ressort, mais sans ses inconvénients. On verra dans la suite qu'il est cependant possible de concevoir une version de la vanne de l'invention avec un ressort permettant notamment de favoriser une fermeture rapide de la vanne.

La version de la vanne de l'invention avec une compensation en pression telle qu'expliquée auparavant, effectuée sur la haute pression, permet d'éviter les problèmes mentionnés auparavant de dilatations thermiques parasites et de variations de tolérance sans pour autant modifier sensiblement la vitesse de réponse de la vanne.

L'équilibre des pressions s'effectue en effet très rapidement, car les volumes des chambres hydrauliques sont petits, particulièrement au niveau du siège de la vanne et derrière le pointeau. Ceci permet également de réduire les à-coups hydrauliques sur les pièces en mouvement, et de les préserver de l'usure qui en résulterait.

Il est également possible de mettre en oeuvre une version à actionnement direct de la soupape, dans laquelle cette dernière est constituée d'un pointeau directement fixé à la rondelle, et apte à obstruer un unique orifice reliant une chambre hydraulique à haute pression à une chambre hydraulique à basse pression.

Dans ce type de vanne dite « directe », la conception doit être plus axée sur la possibilité d'affiner les réglages mécaniques, qui peuvent être plus délicats à effectuer. L'avantage principal est de conduire à une légère réduction des temps de réponse, autant pour l'ouverture que pour la fermeture de la vanne.

Dans cette configuration directe, le pointeau formant soupape est, de préférence, situé dans la chambre à haute pression. Dans les deux versions de l'invention, la rondelle piézoélectrique est située dans la chambre hydraulique à basse pression.

En d'autres termes, dans les deux cas, le pointeau constituant la soupape est situé dans la chambre à haute pression alors que l'élément piézoélectrique qui pilote ladite soupape est situé dans la chambre à basse pression. Cette structure n'est pas strictement nécessaire, mais elle s'impose car elle est à la fois plus immédiate et plus facile à mettre en oeuvre.

Ainsi que cela a été évoqué auparavant, un ressort peut être appliqué contre la rondelle piézoélectrique pour exercer une force de rappel sollicitant ladite rondelle dans le sens de la fermeture de l'orifice contrôlé par le pointeau qui y est fixé.

A titre principal, ce ressort permet en principe de réduire le temps de réponse à la fermeture. Il faut cependant rappeler que, compte tenu des caractéristiques de conception de la vanne de l'invention, et des choix de fonctionnement opérés, ladite vanne fonctionne parfaitement sans ressort.

Parmi lesdits choix, les électrovannes à composants piézoélectriques peuvent appartenir à deux groupes de solutions : un groupe de configurations dans lesquelles la soupape est fermée pour une tension de commande nulle, et un second groupe qui privilégie l'hypothèse inverse.

De préférence, la vanne hydraulique de l'invention appartient au premier nommé, c'est-à-dire que la soupape est fermée lorsque la tension aux bornes de la rondelle piézoélectrique est égale à zéro.

Ce choix conditionne d'ailleurs un certain nombre des options de conception dont il est fait état dans cette description, notamment en combinaison avec une autre caractéristique utilisée dans le cadre de l'invention, à savoir que la rondelle est, à tension nulle, déformée de telle sorte qu'elle présente une concavité orientée vers le pointeau qui lui est fixé.

Cette précontrainte lui permet en l'occurrence d'exercer une force de fermeture sur le pointeau qui lui est fixé, par effet ressort, sans contrarier pour autant le déplacement de la rondelle dans le sens de l'ouverture sous l'effet de la tension.

Dans ces conditions, l'effort maximal de la rondelle piézoélectrique est exercé pour un déplacement nul. Lorsque le mouvement est amorcé, le déplacement de la rondelle augmente, et l'effort disponible se réduit. Mais cela n'est plus un problème car l'effort nécessaire pour le fonctionnement est également réduit, du fait de la compensation en pression procurée par l'invention.

Cette conception permet également, même en l'absence de ressort, d'accélérer la fermeture car, plus on se rapproche de la position de fermeture, plus l'effort augmente. Cela va dans le sens d'une efficacité maximale pour garantir l'étanchéité à la fermeture car l'inertie de la partie mobile de la vanne est accélérée dans les moments où c'est le plus nécessaire.

Par ailleurs, selon une possibilité, la rondelle peut présenter des orifices répartis sur sa couronne. Cette caractéristique favorise également un déplacement rapide car les trous dans la couronne favorisent le passage du fluide, ce qui réduit la résistance au mouvement.

En somme, la configuration de l'invention basée sur l'utilisation d'une rondelle piézoélectrique permet de réduire le volume de la matière piézoélectrique, et donc le coût de l'ensemble, mais aussi de pouvoir disposer d'un effort et d'un déplacement axial suffisants pour une utilisation dans une vanne hydraulique. L'intérêt de l'utilisation d'un tel composant est notamment la rapidité du temps de réponse qu'il procure et l'amélioration de la précision du réglage qui en résulte (en débit et/ou en pression). Les problèmes de tolérance sur un composant piézoélectrique n'existent plus, ce qui permet d'assurer facilement, au montage, une fermeture de la vanne notamment lorsque celle-ci appartient au groupe de solutions à soupape fermée lorsque le courant est nul, fermeture en outre garantie par l'effort dû à la déformation de la rondelle. L'effort maximal, fourni en l'absence de signal de commande, communique de plus au pointeau une dynamique favorable dans l'optique de la rapidité de réponse en présence d'un signal.

Par opposition aux solutions basées sur des barreaux piézoélectriques, les rondelles ne subissent aucun changement dimensionnel sensible lorsqu'elles vieillissent. Leur forme d'allure surfacique garantit en outre leur souplesse et permet de mettre en oeuvre une solution compacte. Il n'est enfin plus nécessaire de procéder à une amplification mécanique, et on peut donc s'affranchir de tout système à cet effet.

L'absence de systèmes additionnels pour compenser les problèmes précités conduit à une solution avec moins de pièces, par conséquent beaucoup moins coûteuse que les solutions de l'art antérieur, et plus fiable.

L"invention va à présent être décrite plus en détail, en référence aux figures annexées pour lesquelles :
la figure 1 est une vue en coupe longitudinale d'une électrovanne hydraulique selon l'invention, dans une version à compensation de pression ;
la figure 2 représente une variante de la configuration de la figure 1 intégrant un ressort agissant sur le sous-ensemble contenant la rondelle piézoélectrique ; et

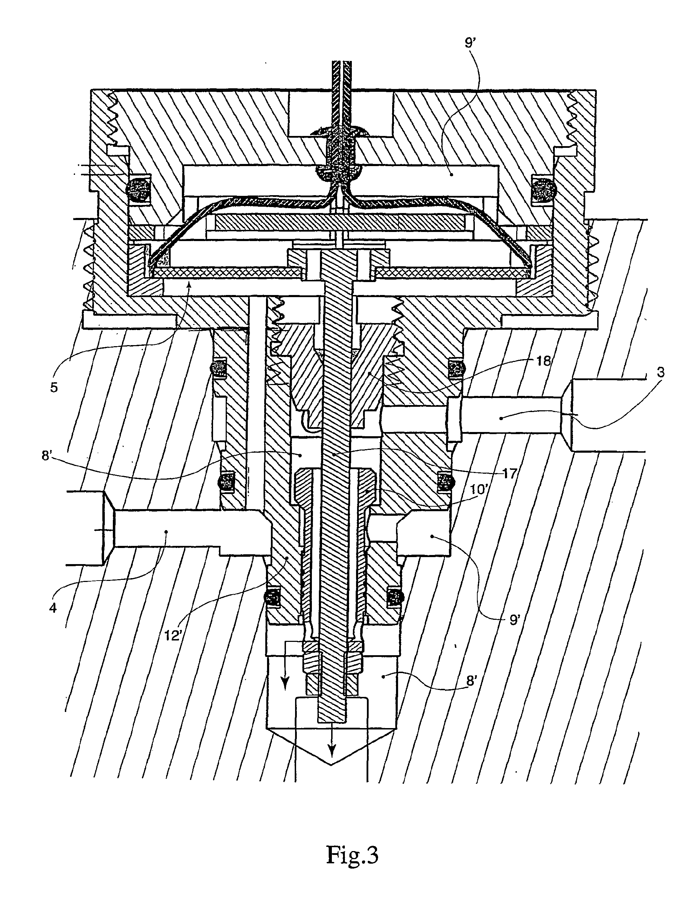

la figure 3 montre une variante avec un actionnement direct de la soupape de la vanne.

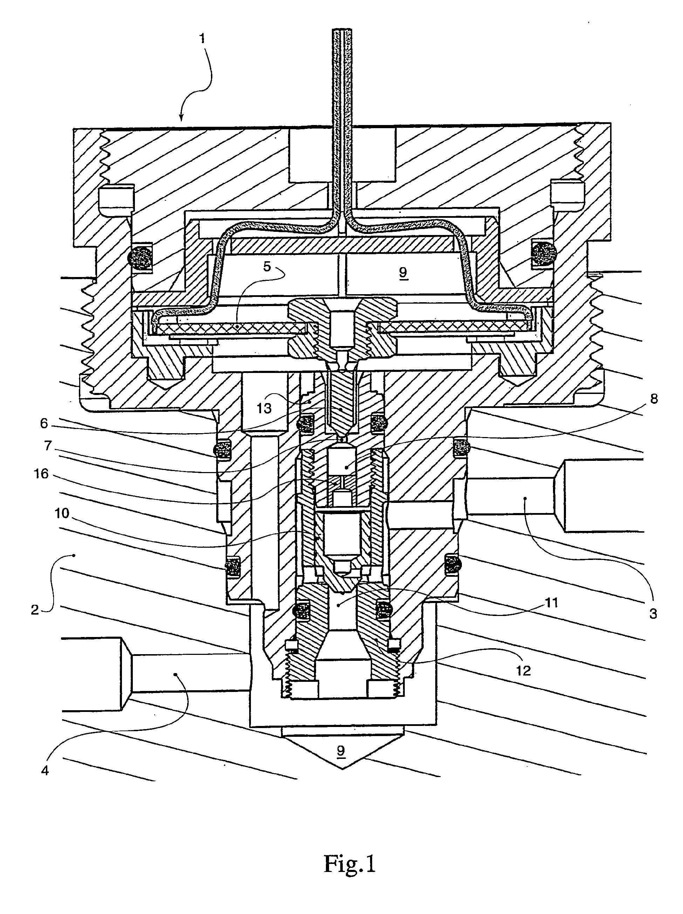

En référence à la figure 1, l'électrovanne (1) de l'invention est fixée à un carter (2) comportant d'une part un conduit d'amenée de fluide à haute pression (3), et d'autre part un conduit de sortie de fluide à basse pression (4). Le fonctionnement de cette électrovanne est basé sur l'existence d'une rondelle piézoélectrique (5) à laquelle est fixé un premier pointeau (6) prévu pour obstruer un orifice (7) séparant une chambre hydraulique à haute pression (8) d'une chambre hydraulique à basse pression (9) dans laquelle se trouve ladite rondelle piézoélectrique (5).

Un second pointeau (10) permet d'obstruer l'extrémité d'un canal (11) reliant la chambre hydraulique à haute pression (8) à la chambre hydraulique à basse pression (9). Ce second pointeau (10) étant en réalité la soupape de la vanne hydraulique de l'invention, le siège de ladite soupape, au débouché du canal (11), est disposé dans une pièce (12) réalisant également le guidage en translation de la soupape (10) facilitant ainsi les réglages initiaux. Ledit déplacement en translation est limité d'une part par le siège précité, et d'autre part par une pièce (13) dans laquelle est pratiqué l'orifice (7) obstrué par le pointeau (6). La nature des relations mécaniques entre les différents composants usuels de l'électrovanne de l'invention, ainsi qu'avec les pièces intermédiaires de liaison par exemple pour la fixation du premier pointeau (6) à la rondelle piézoélectrique (5), ou les modes d'étanchéification (par joint torique) entre lesdits composants, sont considérés comme classiques et par conséquent connus, et ne seront donc pas détaillés dans la présente description.

Le fonctionnement est le suivant : lorsque le courant alimentant la rondelle piézoélectrique (5) est nul, le pointeau (6) obstrue l'orifice (7). La soupape (10) est elle-même en contact avec son siège, et il n'y a pas de communication possible entre la chambre hydraulique à haute pression (8) et la chambre hydraulique à basse pression (9). En revanche, lorsque le courant n'est pas nul, la rondelle piézoélectrique (5) se déforme vers le haut, et le pointeau (6) s'écarte de son siège et ouvre l'orifice (7). Du fait de la communication entre la chambre hydraulique à haute pression (8) et la chambre hydraulique à basse pression (9), la pression chute dans la première citée. Les pressions s'égalisant, la pression augmente corrélativement dans la chambre à basse pression (9), en aval du pointeau (10) constituant la soupape, laquelle s'ouvre et désobstrue le canal (11).

Il est à noter que le fonctionnement ainsi décrit n'est pas proportionnel, car même si on augmente la tension aux bornes de l'élément piézoélectrique, le pointeau (10) ne s'ouvre pas nécessairement plus. Toutefois, à l'aide d'une commande électronique à signaux carrés, dont le rapport cyclique est variable et la fréquence fixe, il est possible d'obtenir un fonctionnement proportionnel grâce à la rapidité de réponse de la vanne, et plus particulièrement du composant piézoélectrique.

Dans la configuration qui est représentée en figure 1, la régulation de pression est réalisée sans ressort. Le retour de la soupape (10) vers sa position de départ est assuré par la différence de pression dans la partie hydraulique de la vanne.

Le fait que l'effort maximal du composant piézoélectrique est exercé pour un déplacement nul permet d'accélérer le déplacement lorsque l'inertie de la partie mobile de la vanne est importante, ce qui va dans le sens d'une accélération du temps de réponse de la vanne. Lorsque le mouvement est amorcé, le déplacement augmente et l'effort disponible de l'élément piézoélectrique se réduit, en adéquation avec l'effort résiduel nécessaire au fonctionnement, qui se réduit également du fait de la compensation en pression.

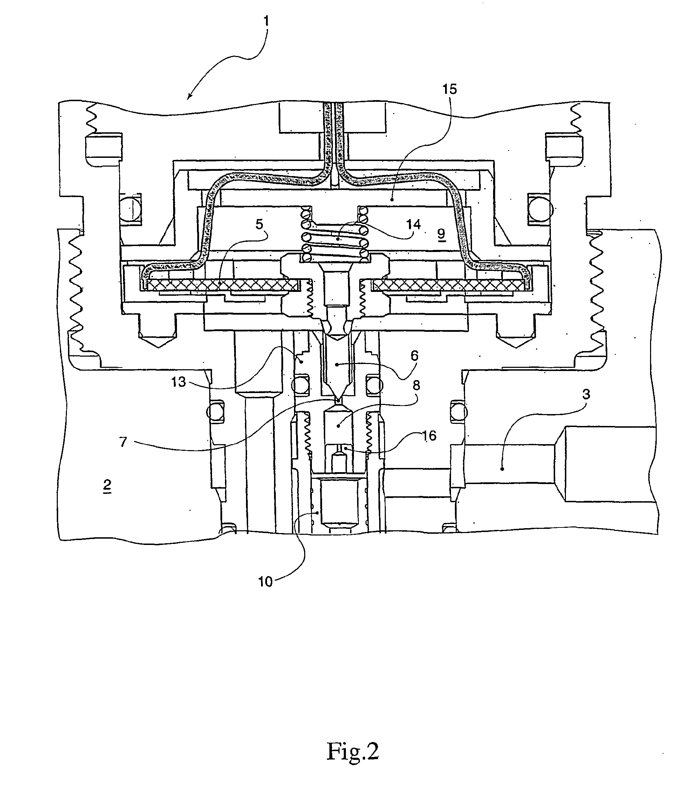

La figure 2 concerne une variante de l'électrovanne de la figure 1, la seule modification consistant en l'introduction d'un ressort (14) entre le composant piézoélectrique (5) et une bague (15) solidaire du carter de l'électrovanne (1). L'intégration du ressort a initialement pour but de réduire le temps de réponse à la fermeture. Elle n'est cependant pas préjudiciable à la rapidité de l'ouverture, en particulier si l'on rajoute des trous dans la couronne piézoélectrique (5) qui diminuent sa résistance au déplacement. En effet, l'effort dû à la pression et au débit sous ladite rondelle (5), et également sous le pointeau (6), est dirigé vers le haut et augmente lorsque la course de l'élément piézoélectrique, et par conséquent du pointeau (6) augmente. Cet effort permet en fait de garder la rondelle piézoélectrique dans sa position d'ouverture, malgré le ressort et malgré le fait que, en bout de course, l'effort d'ouverture de l'élément piézoélectrique diminue.

Lorsqu'on coupe la tension aux bornes de l'élément piézoélectrique (5), le ressort aide à la fermeture. Les orifices éventuellement pratiqués dans la couronne de l'élément piézoélectrique favorisent également, mais en sens inverse, le passage du fluide à travers ladite couronne.

A la place ou en sus du ressort (15), on peut également prévoir une pièce additionnelle (16) disposée dans la chambre hydraulique à haute pression (8), à l'intérieur de la pièce (13) contenant l'orifice (7) et guidant le premier pointeau (6) en translation. Cette pièce (16), qui restreint très sensiblement le passage du fluide vers ledit orifice (7), crée une restriction au dit passage qui permet d'obtenir l'effet d'un ressort, mais sans en avoir les inconvénients, puisqu'elle n'a pas d'effet sur le déplacement du composant piézoélectrique (5).

La configuration présentée en figure (3) est à entraînement direct. Dans ce cas, le pointeau (10') constituant la soupape est directement solidarisé, via l'arbre (17), à la rondelle piézoélectrique (5). Dans cette hypothèse, la chambre hydraulique à haute pression (8') est localisée entre une pièce (18) guidant l'arbre (17), et le siège de la soupape (10'), contenu dans un élément (12') aidant de plus à son guidage. Lorsque la tension aux bornes de l'élément piézoélectrique (5) est nulle, la soupape (10') repose au contact de son siège pratiqué dans la pièce (12'). Lorsque la tension n'est pas nulle, la rondelle piézoélectrique (5) se déforme vers le haut, entraînant l'arbre (17) et ladite soupape (10'), qui s'écarte par conséquent de son siège, et permet un échange de pression entre la chambre hydraulique à haute pression (8') et la chambre hydraulique à basse pression (9').

Dans la conception dite « directe », c'est-à-dire avec une rondelle piézoélectrique (5) directement solidarisée à la soupape (10'), le réglage mécanique peut être plus difficile à effectuer que dans les variantes à compensation de pression. Le problème des fuites pouvant exister entre les chambres hydrauliques respectivement à haute pression (8') et à basse pression (9') doit également être envisagé avec attention. Cela étant, une telle conception peut aider à réduire les temps de réponse à l'ouverture et à la fermeture de la vanne.

Dans toutes les variantes présentées auparavant, les chambres hydrauliques à haute pression (8, 8') sont par exemple portées à une pression de l'ordre de 200 bars, alors que les chambres hydrauliques à basse pression (9, 9') sont à une pression de 5 à 5,5 bars. Les vannes de l'invention, qui permettent comme on l'a déjà mentionné des régulations de débit ou de pression, peuvent par exemple être utilisées dans des systèmes d'injection automobile (diesel ou essence), mais aussi dans tous les secteurs où un fluide doit être régulé en débit ou en pression, comme le freinage automobile, etc.

Les débits et les pressions peuvent être importants (2000 bars et 240 litres par heure par exemple) et la température d'utilisation peut aller jusqu'à environ +130°C. Cette technologie permet par conséquent de respecter les contraintes d'utilisation dans un environnement tel qu'un moteur d'automobile. Les caractéristiques des électrovannes sont bien entendu adaptables à chaque utilisation prévue, par exemple par adaptation des diamètres en fonction des débits et des pressions prévus.

Encore une fois, l'intérêt de la technologie piézoélectrique, appliquée à ces vannes hydrauliques, est la rapidité de la réponse aboutissant à améliorer la précision de ce réglage, que ce soit en débit ou en pression. Or, dans le futur, les temps de réponse demandés par ce type de composants seront de plus en plus réduits, et les technologies basées sur les bobines, si elle veulent suivre la tendance, seront de plus en plus onéreuses. L'utilisation d'éléments piézoélectriques dans des configurations simples et peu coûteuses est donc prometteuse.

## Revendications

1. Vanne hydraulique de régulation de débit ou de pression comportant au moins une soupape (10, 10') mobile en translation entre une position de fermeture au contact d'un siège et une position d'ouverture à distance de celui-ci, le déplacement de ladite soupape (10, 10') étant piloté par une pièce piézoélectrique (5), **caractérisée en ce que** ladite pièce (5) est une rondelle, un pointeau (6, 10') présentant un axe de déplacement confondu avec l'axe de la rondelle (5) étant fixé au centre de la rondelle (5).

2. Vanne hydraulique selon la revendication précédente, **caractérisée en ce que** l'axe de la rondelle (5) est parallèle à l'axe de translation de la soupape (10, 10').

3. Vanne hydraulique selon l'une des revendications précédentes, **caractérisée en ce qu'**un premier pointeau (6) est fixé à ladite rondelle (5), apte à obstruer un premier orifice (7) reliant une chambre hydraulique à basse pression (9) à une chambre hydraulique à haute pression (8), la soupape étant constituée d'un second pointeau (10) obstruant un second orifice (11) reliant les chambres respectivement à haute et à basse pression.

4. Vanne hydraulique selon la revendication précédente, **caractérisée en ce que** le premier pointeau (6) est fixé au centre de la rondelle (5).

5. Vanne hydraulique selon l'une des revendications 3 et 4, **caractérisée en ce que** la soupape (10) est mobile et guidée en translation entre son siège et une butée située, selon l'axe de son déplacement, à l'opposé dudit siège.

6. Vanne hydraulique selon l'une quelconque des revendications 3 à 5, **caractérisée en ce que** le second pointeau (10) constituant la soupape comporte une cavité axiale ouverte sur l'extérieur.

7. Vanne hydraulique selon la revendication précédente, **caractérisée en ce que** ladite cavité comporte deux ouvertures disposées respectivement à l'opposé et à proximité de la portion du pointeau (10) coopérant avec le siège de la soupape, dans la même chambre hydraulique (8).

8. Vanne hydraulique selon l'une quelconque des revendications 3 à 7, **caractérisée en ce que** l'accès au premier orifice (7), dans la chambre à haute pression (8), est partiellement obstrué pour le fluide par une pièce (16) restreignant le passage du fluide à un canal de diamètre inférieur à celui dudit premier orifice (7).

9. Vanne hydraulique selon l'une des revendications 3 à 8, **caractérisée en ce que** le premier pointeau (6) est situé dans la chambre hydraulique à basse pression (9).

10. Vanne hydraulique selon l'une des revendications 1 et 2, **caractérisée en ce que** la soupape est constituée d'un pointeau (10') fixé à la rondelle (5), et apte à obstruer un unique orifice reliant une chambre hydraulique à haute pression (8') à une chambre hydraulique à basse pression (9').

11. Vanne hydraulique selon l'une quelconque des revendications précédentes, **caractérisée en ce que** le pointeau (10, 10') formant soupape est situé dans la chambre à haute pression (8, 8').

12. Vanne hydraulique selon l'une quelconque des revendications précédentes, **caractérisée en ce que** la rondelle piézoélectrique (5) est située dans la chambre hydraulique à basse pression(9, 9').

13. Vanne hydraulique selon l'une quelconque des revendications 3 à 12, **caractérisée en ce qu'**un ressort (14) est appliqué contre la rondelle piézoélectrique (5), exerçant une force de rappel sollicitant ladite rondelle (5) dans le sens de la fermeture de l'orifice (7) contrôlé par le pointeau (6) qui lui est fixé.

14. Vanne hydraulique selon l'une quelconque des revendications précédentes, **caractérisée en ce que** la soupape (10, 10') est fermée lorsque la tension aux bornes de la rondelle piézoélectrique (5) est nulle.

15. Vanne hydraulique selon la revendication précédente, **caractérisée en ce que** la rondelle (5) est, à tension nulle, déformée de telle sorte qu'elle présente une concavité orientée vers le pointeau (6,10') qui lui est fixé.

16. Vanne hydraulique selon l'une quelconque des revendications précédentes, **caractérisée en ce que** la rondelle (5) présente des orifices répartis sur sa couronne.

## Claims

1. Flow-regulating or pressure-regulating hydraulic valve comprising at least one valve shutter (10, 10') capable of translational movement between a closed position in contact with a seat, and an open position away from this seat, the movement of the said valve shutter (10, 10') being driven by a piezoelectric component (5), **characterized in that** the said component (5) is a washer, a valve needle (6, 10') having an axis of travel that coincides with the axis of the washer (5) being fixed to the centre of the washer (5).

2. Hydraulic valve according to the preceding claim, **characterized in that** the axis of the washer (5) is parallel to the axis of translational movement of the valve shutter (10, 10').

3. Hydraulic valve according to one of the preceding claims, **characterized in that** a first valve needle (6) is fixed to the said washer (5), and able to close off a first port (7) connecting a low-pressure hydraulic chamber (9) to a high-pressure hydraulic chamber (8), the valve shutter consisting of a second valve needle (10) closing off a second port (11) connecting the respective high-pressure and low-pressure chambers.

4. Hydraulic valve according to the preceding claim, **characterized in that** the first valve needle (6) is fixed to the middle of the washer (5).

5. Hydraulic valve according to one of Claims 3 and 4, **characterized in that** the valve shutter (10) is capable of moving and guided in translational movement between its seat and an end stop located, along the axis of its travel, at the opposite end to the said seat.

6. Hydraulic valve according to any one of Claims 3 to 5, **characterized in that** the second valve needle (10) that constitutes the valve shutter comprises an axial cavity open to the outside.

7. Hydraulic valve according to the preceding claim, **characterized in that** the said cavity has two openings positioned one opposite to and the other close to the portion of the valve needle (10) collaborating with the valve seat, in the same hydraulic chamber (8).

8. Hydraulic valve according to any one of Claims 3 to 7, **characterized in that** access to the first port (7), in the high-pressure chamber (8), is partially closed off to fluid by a component (16) that restricts the passage of fluid to a duct of a diameter smaller than that of the said first port (7).

9. Hydraulic valve according to one of Claims 3 to 8, **characterized in that** the first valve needle (6) is located in the low-pressure hydraulic chamber (9).

10. Hydraulic valve according to one of Claims 1 and 2, **characterized in that** the valve shutter consists of a valve needle (10') fixed to the washer (5) and capable of closing off just one port that connects a high-pressure hydraulic chamber (8') to a low-pressure hydraulic chamber (9').

11. Hydraulic valve according to any one of the preceding claims, **characterized in that** the valve needle (10, 10') that forms the valve shutter is located in the high-pressure chamber (8, 8').

12. Hydraulic valve according to any one of the preceding claims, **characterized in that** the piezoelectric washer (5) is situated in the low-pressure hydraulic chamber (9, 9').

13. Hydraulic valve according to any one of Claims 3 to 12, **characterized in that** a spring (14) is pressed against the piezoelectric washer (5) to exert a return force that urges the said washer (5) in the direction that closes the port (7) controlled by the valve needle (6) fixed to it.

14. Hydraulic valve according to any one of the preceding claims, **characterized in that** the valve shutter (10, 10') is closed when the voltage across the terminals of the piezoelectric washer (5) is zero.

15. Hydraulic valve according to the preceding claim, **characterized in that** the washer (5) is, at zero voltage, deformed in such a way that it has a concave side facing towards the valve needle (6, 10') which is fixed to it.

16. Hydraulic valve according to any one of the preceding claims, **characterized in that** the washer (5) has holes distributed about it annulus.

## Patentansprüche

1. Hydraulisches Schieberventil zur Durchfluss- oder Druckregelung, das mindestens ein Ventil (10, 10') aufweist, das zwischen einer Schließstellung in Kontakt mit einem Sitz und einer Öffnungsstellung in Abstand zu diesem translationsbeweglich ist, wobei die Bewegung des Ventils (10, 10') von einem piezoelektrischen Bauteil (5) gesteuert wird, **dadurch gekennzeichnet, dass** das Bauteil (5) eine Scheibe ist, wobei eine Ventilnadel (6, 10') mit einer Bewegungsachse, die mit der Achse der Scheibe (5) zusammenfällt, in der Mitte der Scheibe (5) befestigt ist.

2. Hydraulisches Schieberventil nach dem vorhergehenden Anspruch, **dadurch gekennzeichnet, dass** die Achse der Scheibe (5) parallel zur Translationsachse des Ventils (10, 10') ist.

3. Hydraulisches Schieberventil nach einem der vorhergehenden Ansprüche, **dadurch gekennzeichnet, dass** eine erste Ventilnadel (6) an der Scheibe (5) befestigt ist, die in der Lage ist, eine erste Öffnung (7) zu verschließen, die eine Niederdruck-Hydraulikkammer (9) mit einer Hochdruck-Hydraulikkammer (8) verbindet, wobei das Ventil aus einer zweiten Ventilnadel (10) besteht, die eine zweite Öffnung (11) verschließt, die die Hochdruck- und die Niederdruckkammer verbindet.

4. Hydraulisches Schieberventil nach dem vorhergehenden Anspruch, **dadurch gekennzeichnet, dass** die erste Ventilnadel (6) in der Mitte der Scheibe (5) befestigt ist.

5. Hydraulisches Schieberventil nach einem der Ansprüche 3 und 4, **dadurch gekennzeichnet, dass** das Ventil (10) beweglich ist und in Translation zwischen seinem Sitz und einem Anschlag geführt wird, der sich gemäß der Achse seiner Bewegung entgegengesetzt zum Sitz befindet.

6. Hydraulisches Schieberventil nach einem der Ansprüche 3 bis 5, **dadurch gekennzeichnet, dass** die das Ventil bildende zweite Ventilnadel (10) einen nach außen offenen axialen Hohlraum aufweist.

7. Hydraulisches Schieberventil nach dem vorhergehenden Anspruch, **dadurch gekennzeichnet, dass** der Hohlraum zwei Öffnungen aufweist, die entgegengesetzt zu bzw. in der Nähe des Abschnitts der Ventilnadel (10) angeordnet sind, der mit dem Sitz des Ventils in der gleichen Hydraulikkammer (8) zusammenwirkt.

8. Hydraulisches Schieberventil nach einem der Ansprüche 3 bis 7, **dadurch gekennzeichnet, dass** der Zugang zur ersten Öffnung (7) in der Hochdruckkammer (8) für das Fluid teilweise von einem Bauteil (16) verschlossen wird, das den Durchgang des Fluids auf einen Kanal mit einem Durchmesser beschränkt, der kleiner ist als derjenige der ersten Öffnung (7).

9. Hydraulisches Schieberventil nach einem der Ansprüche 3 bis 8, **dadurch gekennzeichnet, dass** die erste Ventilnadel (6) sich in der Niederdruck-Hydraulikkammer (9) befindet.

10. Hydraulisches Schieberventil nach einem der Ansprüche 1 und 2, **dadurch gekennzeichnet, dass** das Ventil aus einer Ventilnadel (10') besteht, die an der Scheibe (5) befestigt und fähig ist, eine einzige Öffnung zu verschließen, die eine Hochdruck-Hydraulikkammer (8') mit einer Niederdruck-Hydraulikkammer (9') verbindet.

11. Hydraulisches Schieberventil nach einem der vorhergehenden Ansprüche, **dadurch gekennzeichnet, dass** die das Ventil bildende Ventilnadel (10, 10') sich in der Hochdruckkammer (8, 8') befindet.

12. Hydraulisches Schieberventil nach einem der vorhergehenden Ansprüche, **dadurch gekennzeichnet, dass** die piezoelektrische Scheibe (5) sich in der Niederdruck-Hydraulikkammer (9, 9') befindet.

13. Hydraulisches Schieberventil nach einem der Ansprüche 3 bis 12, **dadurch gekennzeichnet, dass** eine Feder (14) gegen die piezoelektrische Scheibe (5) angelegt wird, die eine Rückstellkraft ausübt, die die Scheibe (5) in Richtung des Schließens der Öffnung (7) antreibt, die von der an ihr befestigten Ventilnadel (6) geregelt wird.

14. Hydraulisches Schieberventil nach einem der vorhergehenden Ansprüche, **dadurch gekennzeichnet, dass** das Ventil (10, 10') geschlossen wird, wenn die Spannung an den Klemmen der piezoelektrischen Scheibe (5) Null ist.

15. Hydraulisches Schieberventil nach dem vorhergehenden Anspruch, **dadurch gekennzeichnet, dass** die Scheibe (5) bei Nullspannung so verformt wird, dass sie eine zu der an ihr befestigten Ventilnadel (6, 10') gerichtete Höhlung aufweist.

16. Hydraulisches Schieberventil nach einem der vorhergehenden Ansprüche, **dadurch gekennzeichnet, dass** die Scheibe (5) auf ihrem Kranz verteilte Öffnungen hat.
